# EUROPEAN PATENT SPECIFICATION

(11) **EP 2 993 951 B1**
(45) Date of publication and mention of the grant of the patent: **07.08.2019**
(21) Application number: 15183512.1
(22) Date of filing: 02.09.2015
(51) Int. Cl.: H04W 72/12, H04W 76/10

(54) **METHOD AND APPARATUS FOR IMPROVING DOWNLINK CONTROL INFORMATION, DCI, IN A WIRELESS COMMUNICATION SYSTEM**
VERFAHREN UND VORRICHTUNG ZUR VERBESSERUNG VON DOWNLINK-STEUERUNGSINFORMATIONEN, DCI, IN EINEM DRAHTLOSKOMMUNIKATIONSSYSTEM
PROCÉDÉ ET APPAREIL PERMETTANT D'AMÉLIORER DES INFORMATIONS DE COMMANDE DE LIAISON DESCENDANTE, DCI, DANS UN SYSTÈME DE COMMUNICATION SANS FIL

(30) Priority: 05.09.2014 US 201462046464 P; 18.08.2015 US 201514829363
(43) Date of publication of application: 09.03.2016
(73) Proprietor: ASUSTeK Computer Inc., Taipei City 112 (TW)
(72) Inventor: LI, Ming-Che, 112 Taipei City (TW); GUO, Yu-Hsuan, 112 Taipei City (TW); CHANG, Wei-Che, 112 Taipei City (TW)
(74) Representative: Hoefer & Partner Patentanwälte mbB

(56) References cited:
- WO-A1-2015/167714
- WO-A2-2012/011658
- US-A1- 2013 196 701
- BENJEBBOUR ANASS ET AL: "Concept and practical considerations of non-orthogonal multiple access (NOMA) for future radio access", 2013 INTERNATIONAL SYMPOSIUM ON INTELLIGENT SIGNAL PROCESSING AND COMMUNICATION SYSTEMS, IEEE, 12 November 2013 (2013-11-12), pages 770-774, XP032541968, DOI: 10.1109/ISPACS.2013.6704653 [retrieved on 2014-01-06]

## Description

This disclosure generally relates to wireless communication networks, and more particularly, to methods and apparatus for improving DCI in a wireless communication system according to the pre-characterizing parts of independent claims 1, 3, 11, and 12, respectively. Such methods and apparatus are shown in WO 2015/167714 A1.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

A method and apparatus are disclosed for improving downlink control information in a wireless communication system. In one embodiment, the method includes receiving a first control signaling indicating a first transmission to a first UE (User Equipment), wherein the first control signaling is identified by a first identification used by the first UE. The method also includes receiving a second control signaling indicating a second transmission to a second UE, wherein the second control signaling is identified by a second identification used by the second UE. The method further includes decoding the first transmission based on information provided by at least the first control signaling and the second control signaling, wherein radio resource used by the first transmission is indicated by the second control signaling but is not indicated by the first control signaling.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a reproduction of in Fig. 1 of "Concept and Practical Considerations of Non-orthogonal Multiple Access (NOMA) for Future Radio Access" by Anass Benjebbour, Yuya Saito, and Yoshihisa Kishiyama.
FIG. 6 is a flow chart according to one exemplary embodiment.
FIG. 7 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to the wireless technology discussed in various documents of the Mobile and wireless communications Enablers for Twenty-twenty (2020) Information Society (METIS) project, including: "Non-Orthogonal Multiple Access (NOMA) for Future Radio Access" by Yuya Saito, Yoshihisa Kishiyama, and Anass Benjebbour; "Concept and Practical Considerations of Non-orthogonal Multiple Access (NOMA) for Future Radio Access" by Anass Benjebbour, Yuya Saito, and Yoshihisa Kishiyama; "System-Level Performance Evaluation of Downlink Non-orthogonal Multiple Access (NOMA)" by Yuya Saito, Anass Benjebbour, Yoshihisa Kishiyama, and Takehiro Nakamura; " System-Level Performance of Downlink NOMA for Future LTE Enhancements" by Anass Benjebbour, Anxin Li, Yuya Saito, and Yoshihisa Kishiyama; and METIS Public Deliverable D2.3 "Components of a new air interface - building blocks and performance".

Furthermore, the exemplary wireless communication systems devices described below may be designed to support one or more standards such as the standard offered by a consortium named "3rd Generation Partnership Project" referred to herein as 3GPP, including: TS 36.300 V12.2.0, "E-UTRA Overall description; Stage 2 (Release 12)"; TS 36.211 V12.2.0 "E-UTRA Physical channels and modulation (Release 12)"; and TS 36.212 V12.1.0 "E-UTRA Multiplexing and channel coding (Release 12)".

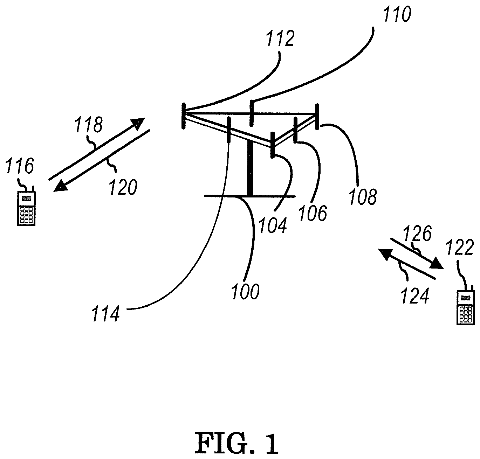

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

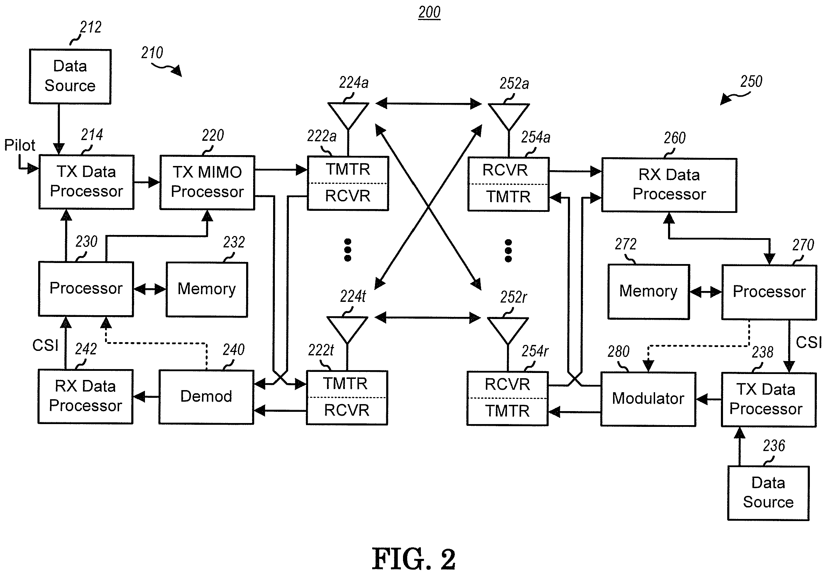

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides NT modulation symbol streams to NT transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. NT modulated signals from transmitters 222a through 222t are then transmitted from NT antennas 224a through 224t, respectively.

At receiver system 250, the transmitted modulated signals are received by NR antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the NR received symbol streams from NR receivers 254 based on a particular receiver processing technique to provide NT "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

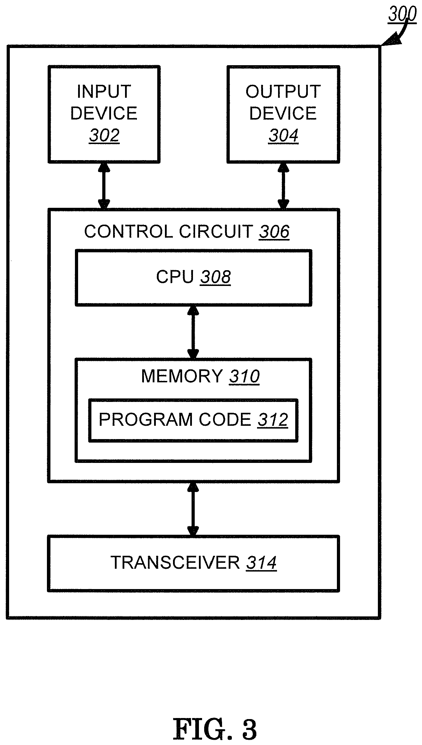

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

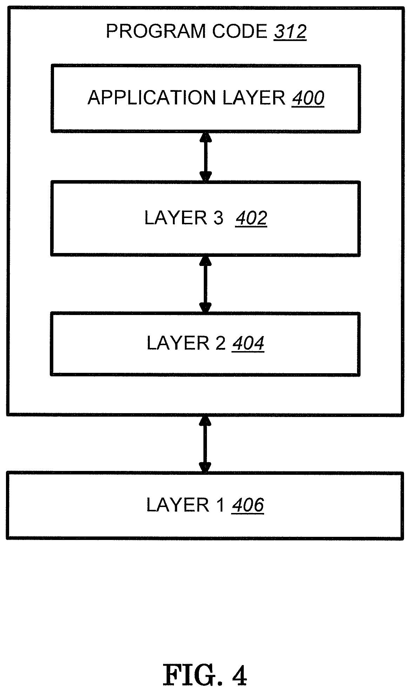

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

In the study for a future mobile and wireless communications system, NOMA (Non-Orthogonal Multiple Access) is generally a future multiple access technique. NOMA could provide higher spectrum efficiency by multiplexing signals of multiple UEs in the power domain, as discussed in the following documents: (1) "Non-Orthogonal Multiple Access (NOMA) for Future Radio Access" by Yuya Saito, Yoshihisa Kishiyama, and Anass Benjebbour, (2) "Concept and Practical Considerations of Non-orthogonal Multiple Access (NOMA) for Future Radio Access" by Anass Benjebbour, Yuya Saito, and Yoshihisa Kishiyama, (3) "System-Level Performance Evaluation of Downlink Non-orthogonal Multiple Access (NOMA)" by Yuya Saito, Anass Benjebbour, Yoshihisa Kishiyama, and Takehiro Nakamura, and (4) " System-Level Performance of Downlink NOMA for Future LTE Enhancements" by Anass Benjebbour, Anxin Li, Yuya Saito, and Yoshihisa Kishiyama.

Furthermore, as discussed in METIS Public Deliverable D2.3, in the METIS project, NOMA is considered as one of radio link technology components to achieve the target of 1000 times higher mobile data volume per area. More specifically, METIS Public Deliverable D2.3 "Components of a new air interface - building blocks and performance" states:

### Non-Orthogonal Multiple Access (NOMA)

### Technology description and enablers

As a downlink multiple access, non-orthogonal multiple access (NOMA) is proposed where multiple users are multiplexed in the power-domain on the base station side and multi-user signal separation at the UE side is conducted based on successive interference cancellation (SIC). In addition to the signalling aspects related to NOMA are investigated in Section 2.5, multi-user transmit power allocation, MCS selection and candidate user set selection are key component technologies. At the transmitter side, based on the channel gain (SNR) feedback information from users, multi-user power allocation and MCS selection are conducted, and the user set that maximizes multi-user proportional fairness is scheduled. Dynamic switching between NOMA and OMA is introduced such that NOMA is applied only when it provides gains over OMA.

### System and signal models

There are K users per cell and the total transmit bandwidth is divided into different subbands. The transmit signal at every subcarrier of a subband is a simple summation of the coded modulation symbol of all users from a scheduled user set, so that their signals are superposed in the power domain. The received signal at a UE in a subband is represented by the sum of the contribution of the superposed signals, which is impaired by the channel and a contribution given by noise plus inter-cell interference. In NOMA, users with high channel gain and low channel gain are paired. At the UE with high channel gain, SIC receiver is applied in order to first cancel interference from the UE with low channel gain (high transmit power allocation). The UE with low channel gain simply treats interference from the signal of the UE with high channel gain (low transmit power allocation) as noise.

In addition, METIS Public Deliverable D2.3 describes the signaling for NOMA as follows:

### Advanced signaling concepts

In [HK12, HK13], a downlink non-orthogonal multiple access is investigated where multiple users are multiplexed in the power-domain, at the transmitter side, and multi-user signal separation is conducted at the receiver side based on successive interference cancellation (SIC).

In [SKB+13, BSK+13], the basic concept and benefits of non-orthogonal multiple access (NOMA) as a candidate for future multiple access schemes are explained and discussed in details. In [SBK+13, BLS+13], initial system-level evaluation results of NOMA were discussed and investigated to demonstrate its potential gains in low and high mobility scenarios assuming with and without SIC error propagation, exhaustive full search on candidate user pairs, and dynamic transmit power allocation such as fractional transmit power allocation (FTPA).

### Signalling for non-orthogonal multiple access

Signalling aspects related to multi-user power allocation and MCS selection are also studied for NOMA in order to balance performance gains with signalling overhead. Here, the impact of signalling reduction of full-search power allocation on NOMA performance is investigated.

### Full search multi-user power allocation (FSPA)

Exhaustive full search of user pairs and transmit power allocations provide the best performance for NOMA. In the case of full search power allocation, multiple combinations of power allocations are considered for all candidate user sets considered by the scheduler. For FSPA, the number of power sets N to be searched becomes an optimization parameter. With large number of power sets, the performance gains of NOMA increase, while with less number of power sets, we can decrease the amount of downlink signalling. For example, the order of successive interference cancellation (SIC) and information on power assignment do not need to be transmitted in every subframe but rather on a longer time scale.

In LTE/LTE-A, the overall architecture is described in 3GPP TS 36.300 V12.2.0. For downlink data transmission transmitted from network to a UE, the processing structure is described in Section 5.3.2 of 3GPP TS 36.212 V12.1.0 and Section 6.3 of 3GPP TS 36.211 V12.2.0. The downlink control information, e.g. DCI on PDCCH (Physical Downlink Control Channel), is described in Section 5.3.3 of 3GPP TS 36.212 V12.1.0.

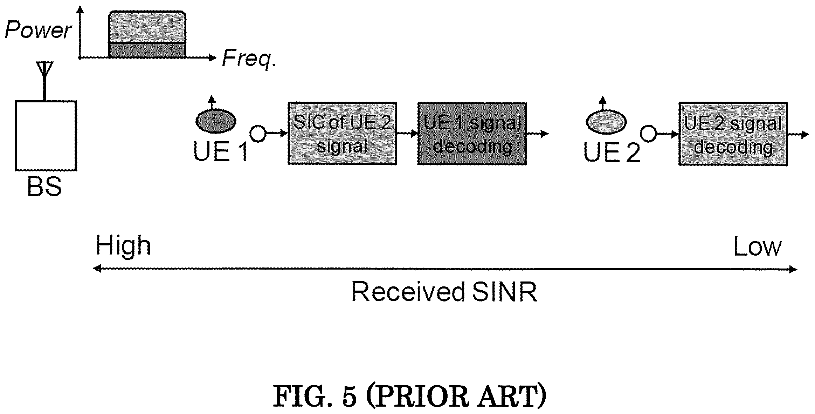

In general, NOMA is a multiple access technique in the power domain. In downlink, the network can have one transmission to multiple UEs (e.g., paired UEs) on the same radio resource in the same timing. FIG. 5 is a reproduction of in Fig. 1 of "Concept and Practical Considerations of Non-orthogonal Multiple Access (NOMA) for Future Radio Access" by Anass Benjebbour, Yuya Saito, and Yoshihisa Kishiyama. In general, FIG. 5 illustrates downlink NOMA for the case of one BS (Base Station) and two UEs. As shown in FIG. 5, upon receiving a transmission on the radio resource in the timing, UE1 first decodes the UE2 signal and then cancels the UE2 signal part from the received transmission. After the cancellation, the remaining part of the received transmission is the UE1 signal; and the UE1 can decode the UE1 signal. However, if UE1 does not successfully decode the UE2 signal, the interference caused by UE2 signal could not be cancelled. Then, the UE1 could not decode UE1 signal successfully.

Generally, for a data block from high layer, the encoding behavior in transmitter may comprise some or all of the following steps: (1) CRC (Cyclic Redundancy Check) attachment, (2) channel coding, (3) rate matching, (4) scrambling, (5) modulation, (6) layer mapping/precoding, (7) resource element mapping, and (8) signaling generation (as discussed in 3GPP TS 36.212 and 3GPP TS 36.211). The receiver would decode the signal based on the steps inversely.

In the step of CRC attachment, an identification (such as a UE identification) could be scrambled on the CRC parity bits. The receiver could use the identification for descrambling, and could determine whether the CRC check is passed or not. If the CRC check passes, it means the data block has been decoded successfully; otherwise the decoding has failed. When utilizing NOMA, UE1 may need the identification used by UE2 in order to check whether the UE2 signal for the UE2 has been decoded successfully or not. With the information of the identification used by the UE2, the UE1 could decode the received transmission, and could utilize the identification for descrambling on the CRC parity bits. If the CRC check passes, UE1 considers that the UE2 signal has been decoded successfully (e.g., decoded bits are the data block for UE2), and then regenerates the UE2 signal. After cancelling the UE2 signal from the received transmission (as well as signal for other UE(s), if any), UE1 would decode the remaining signal (e.g., the UE1 signal) to acquire the data block for UE1.

In addition, NOMA may require paired UEs to have different channel gains. Since the data traffic and channel condition for each UE would be dynamically changed, it is possible that a transmission to a UE may utilize NOMA and another transmission to the UE in different timing may not utilize NOMA (e.g., OMA). In other words, the utilization of NOMA may be dynamically switched.

Moreover, a UE pair for a NOMA transmission may be dynamically changed. If the UE (e.g., UE1) requires to decode and cancel the signal for the paired UE(s) (e.g., UE2) before decoding the signal for the UE, the UE would need to know some information about the paired UE(s), such as the power ratio between the UE and paired UE(s), and/or the modulation and coding scheme of signal for the paired UE(s). If the UE (e.g., UE2 or the UE receiving a transmission without multiplexing the signals for multiple UEs) is not required to decode and cancel the signal of another UE, the information of the other UE would not be needed. To achieve dynamic switch of NOMA and OMA, the information used to decode signal for the UE1 and signal for the paired UE(s) (including, for example, identification, power information, and/or modulation and coding scheme) may be provided by one downlink control signaling (e.g., PDCCH as discussed in 3GPP TS 36.300 and TS 36.212) to UE1, such as the downlink control signaling includes information of signal for UE1 and information of signal for the paired UE(s).

One concern is that UE1 may require at least two downlink control signaling formats with different format sizes for UE1. One downlink control signaling format includes the information used to decode signal for the paired UE(s) for the case that NOMA is utilized. Alternatively, another downlink control signaling format does not includes the information used to decode signal for the paired UE(s) for the case that NOMA is not utilized. The size difference of these downlink control signaling formats may induce decoding complexity for the UE1. In addition, larger downlink control signaling formats would reduce the number of UEs to be served or scheduled at the same time. Moreover, when NOMA transmission is utilized, the information may be transmitted redundantly since UE2 also requires some or all of the information to decode the signal for UE2 (e.g., some information in the control signaling to UE1 may be the same as some information in the control signaling to UE2).

The general concept of the invention is that a first UE receives a first downlink control signaling and at least a second downlink control signaling, wherein the first downlink signaling indicates a first transmission from network to the first UE and the second downlink control signaling indicates a second transmission from the network to a second UE. In addition, the first downlink control signaling is identified by a first identification used by first UE and the second downlink control signaling is identified by a second identification used by the second UE. Then, the first UE would get sufficient information (e.g., radio resource, modulation and coding scheme, precoding information, and/or redundancy version as discussed in 3GPP TS 36.212) to decode the first transmission, at least from the first downlink control signaling and the second downlink control signaling. More specifically, the first downlink control signaling does not indicate the radio resource used by the first transmission. The radio resource used by the first transmission could be indicated by the second downlink control signaling. In other words, information of radio resource allocation for the first transmission could be obtained from the second downlink control signaling.

In one embodiment, there may be an indication in the first downlink control signaling to enable the UE to decide whether the first UE needs to receive the second downlink control signaling based on at least the indication. Moreover, the first downlink control signaling would include or indicate the second identification used by the second UE (if the indication in the first downlink control signaling indicates that the first UE needs to receive the second downlink control signaling).

Alternatively, the second identification is preconfigured to the first UE. Furthermore, the first transmission could comprise at least a first signal for the first UE and a second signal for the second UE. The first signal and the second signal are multiplexed in the power domain. To decode the first transmission, the first UE could decode the second signal, and then decodes the first signal after cancelling the second signal from the received first transmission. In another embodiment, the first transmission and the second transmission use the same radio resources in the same timing. Alternatively, the first transmission could be the same as the second transmission.

Moreover, modulation and coding scheme (MCS) of the first signal for the first UE could be obtained from the first downlink control signaling. Alternatively, the first downlink control signaling does not indicate the MCS used by the first transmission. The MCS used by the first transmission could be indicated by the second downlink control signaling. In other words, the MCS of the first signal for the first UE could be obtained from the second downlink control signaling (e.g., the first signal and the second signal could use the same MCS). Furthermore, MCS of the second signal for the second UE could be obtained from the second downlink control signaling.

Also, precoding information of the first signal for the first UE could be obtained from the first downlink control signaling. Alternatively, the first downlink control signaling does not indicate the precoding information used by the first transmission. The precoding information used by the first transmission could be indicated by the second downlink control signaling. In other words, the precoding information of the first signal for the first UE could be obtained from the second downlink control signaling (e.g., the first signal and the second signal use the same precoding information). Furthermore, the precoding information of the second signal for the second UE could also be obtained from the second downlink control signaling.

In addition, redundancy version of the first signal for the first UE could be obtained from the first downlink control signaling. Alternatively, the first downlink control signaling does not indicate the redundancy version used by the first transmission. The redundancy version used by the first transmission could be indicated by the second downlink control signaling. In other words, the redundancy version of the first signal for the first UE could be obtained from the second downlink control signaling (e.g., the first signal and the second signal use the same redundancy version). Furthermore, the redundancy version of the second signal for the second UE could also be obtained from the second downlink control signaling.

Furthermore, if the indication in the first downlink control signaling indicates that the first UE does not need to receive the second downlink control signaling, the first downlink control signaling would not include the second identification used by the second UE. In such case, the first downlink control signaling could include sufficient information to decode the first transmission from the network. In one embodiment, regardless whether the indication in the first downlink control signaling indicates that the first UE needs to receive the second downlink control signaling or not, the size of the first downlink control signaling would remain the same. In another embodiment, size of the first downlink control signaling is the same as size of the second downlink control signaling. The size of the first downlink control signaling is not influenced by value of the indication.

In one embodiment, the first downlink control signaling and the second downlink control signaling are transmitted in the same subframe. The first downlink control signaling and/or the second downlink control signaling indicate downlink assignment. The first downlink control signaling and/or the second downlink control signaling are PDCCH signaling (as discussed in 3GPP TS 36.300 and TS 36.212). The first downlink control signaling and/or the second downlink control signaling are transmitted from the network. The first downlink control signaling is transmitted on a first resource for the first UE. The second downlink control signaling is transmitted on a second resource for the second UE.

In another embodiment, the first transmission and/or the second transmission are on PDSCH (Physical Downlink Shared Channel, as discussed in 3GPP TS 36.300). The first transmission and/or the second transmission are transmitted from the network. The first transmission and/or the second transmission use NOMA. The first transmission includes data for the first UE. The second transmission includes data for the second UE.

More specifically, the first identification and the second identification are C-RNTI (Cell Radio Network Temporary Identifier, as discussed in 3GPP TS 36.300). The first identification and the second identification are used for descrambling. The first identification is an identification of the first UE. The second identification is an identification of the second UE.

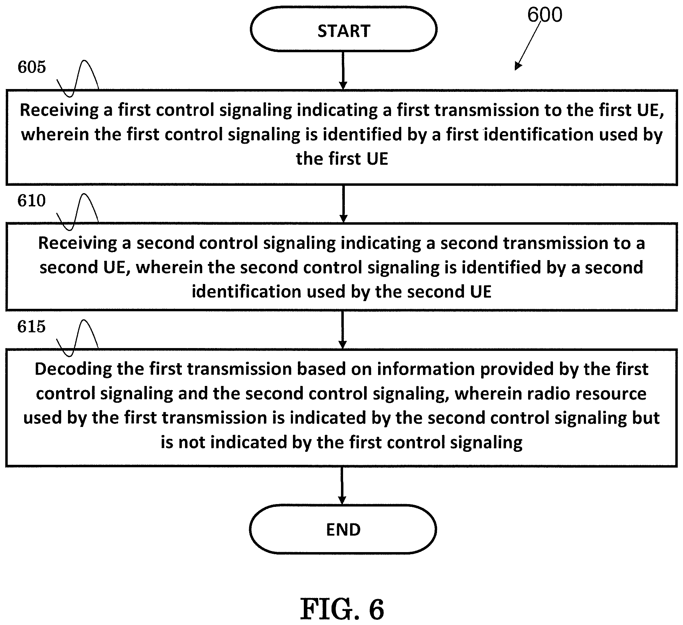

FIG. 6 illustrates a flow chart 600 from the perspective of a first UE in accordance with one exemplary embodiment. In step 605, the first UE receives a first control signaling indicating a first transmission from a network to the first UE, wherein the first control signaling is identified by a first identification used by the first UE. In step 610, the first UE receives a second control signaling indicating a second transmission from the network to a second UE, wherein the second control signaling is identified by a second identification used by the second UE. In step 615, the first UE decodes the first transmission based on information provided by at least the first control signaling and the second control signaling, wherein radio resource used by the first transmission is indicated by the second control signaling but is not indicated by the first control signaling.

Referring back to FIGS. 3 and 4, in one embodiment from the perspective of a first UE, the device 300 includes a program code 312 stored in memory 310 of the transmitter. The CPU 308 could execute program code 312 (i) to receive a first control signaling indicating a first transmission from a network to the first UE, wherein the first control signaling is identified by a first identification used by the first UE, (ii) to receive a second control signaling indicating a second transmission from the network to a second UE, wherein the second control signaling is identified by a second identification used by the second UE, and (iii) to decode the first transmission based on information provided by at least the first control signaling and the second control signaling, wherein radio resource used by the first transmission is indicated by the second control signaling but is not indicated by the first control signaling. In addition, the CPU 308 can execute the program code 312 to perform all of the above-described actions and steps or others described herein.

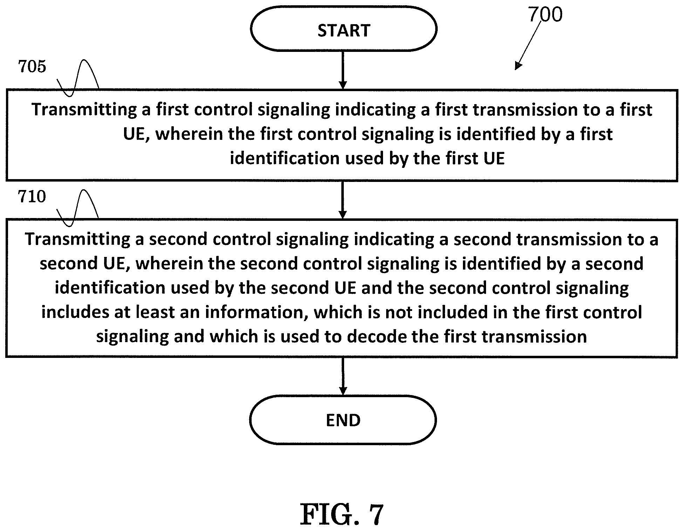

FIG. 7 is a flow chart 700 from the perspective of a network node in accordance with one exemplary embodiment. In step 705, the network node transmits a first control signaling indicating a first transmission to a first UE, wherein the first control signaling is identified by a first identification used by the first UE. In step 710, the network node transmits a second control signaling indicating a second transmission to a second UE, wherein the second control signaling is identified by a second identification used by the second UE and the second control signaling includes at least one of information, which is not included in the first control signaling and which is used to decode the first transmission.

Referring back to FIGS. 3 and 4, in one embodiment from the perspective of a network node, the device 300 includes a program code 312 stored in memory 310 of the transmitter. The CPU 308 could execute program code 312 (i) to transmit a first control signaling indicating a first transmission to a first UE, wherein the first control signaling is identified by a first identification used by the first UE, and (ii) to transmit a second control signaling indicating a second transmission to a second UE, wherein the second control signaling is identified by a second identification used by the second UE and the second control signaling includes at least one of information, which is not included in the first control signaling and which is used to decode the first transmission. In addition, the CPU 308 can execute the program code 312 to perform all of the above-described actions and steps or others described herein.

Based on the various embodiments described above, transmission of redundant scheduling information can be avoided. Furthermore, the impact on the reduction of the number of scheduled UEs in the same time can be eliminated.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains. The scope of the invention is defined by the appended claims.

## Claims

1. A method for a first User Equipment (116), named "UE" hereinafter, in a wireless communication system, comprising:
receiving, (605), by the first UE, a first downlink control signaling indicating a first transmission to the first UE (116), wherein the first downlink control signaling is identified by a first identification used by the first UE (116);
receiving, (610), by the first UE, a second downlink control signaling indicating a second transmission to a second UE (122), wherein the second downlink control signaling is identified by a second identification used by the second UE (122); and
decoding, (615), by the first UE, the first transmission based on information provided by at least the first downlink control signaling and the second downlink control signaling, **characterized in that** radio resource used by the first transmission is indicated by the second downlink control signaling but is not indicated by the first downlink control signaling.

2. The method of claim 1, wherein the second downlink control signaling indicates another information which is not indicated by the first downlink control signaling, wherein the another information is at least one of a redundancy version used by the first transmission, a modulation and coding scheme used by the first transmission, and a precoding information used by the first transmission.

3. A method for a network node (100) in a wireless communication system, comprising:
transmitting (705) a first downlink control signaling indicating a first transmission to a first User Equipment (116), named "UE" hereinafter, wherein the first downlink control signaling is identified by a first identification used by the first UE (116); and
transmitting (710) a second downlink control signaling indicating a second transmission to a second UE (122), wherein the second downlink control signaling is identified by a second identification used by the second UE (122) and the second downlink control signaling includes at least one information, which is not included in the first downlink control signaling and which is used to decode the first transmission, **characterised in that** at least one information includes radio resource used by the first transmission.

4. The method of claim 3, wherein the at least one information includes a redundancy version used by the first transmission, a modulation and coding scheme used by the first transmission, and/or a precoding information used by the first transmission.

5. The method of any one of the preceding claims, wherein the first downlink control signaling includes an indication to enable the first UE (116) to decide whether the first UE (116) needs to receive the second downlink control signaling.

6. The method of any one of the preceding claims, wherein the first downlink control signaling and the second downlink control signaling are transmitted in the same subframe.

7. The method of any one of the preceding claims, wherein the second identification is indicated by the first downlink control signaling or preconfigured to the first UE (116).

8. The method of any one of the preceding claims, wherein the first identification and the second identification are Cell Radio Network Temporary Identifier, named "C-RNTI" hereinafter.

9. The method of any one of the preceding claims, wherein the first transmission comprises at least a first signal for the first UE (116) and a second signal for the second UE (122) multiplexed in the power domain.

10. The method of any one of the preceding claims, wherein the first transmission and the second transmission use the same radio resource in the same timing.

11. A first User Equipment (116), named "UE" hereinafter, in a wireless communication system, comprising:
a control circuit (306);
a processor (308) installed in the control circuit (306); and
a memory (310) installed in the control circuit (306) and operatively coupled to the processor (308);
wherein the processor (308) is configured to execute a program code (312) stored in the memory (310) to enable the first UE (116) to perform the method steps as defined in any one of claims 1, 2 and 5 to 10.

12. A network node (100) in a wireless communication system, comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to enable the network node (100) to perform the method steps as defined in any one of claims 3 to 10.

## Patentansprüche

1. Verfahren für eine erste Teilnehmerausrüstung (116), nachfolgend "UE" genannt, in einem Funkkommunikationssystem, aufweisend:
Empfangen (605) einer ersten Downlink-Steuerungssignalisierung, die eine erste Übertragung zu der ersten UE (116) anzeigt, durch die erste UE, wobei die erste Downlink-Steuerungssignalisierung durch eine erste Identifikation identifiziert wird, die von der ersten UE (116) verwendet wird;
Empfangen (610) einer zweiten Downlink-Steuerungssignalisierung, die eine zweite Übertragung zu einer zweiten UE (122) anzeigt, durch die erste UE, wobei die zweite Downlink-Steuerungssignalisierung durch eine zweite Identifikation identifiziert wird, die von der zweiten UE (122) verwendet wird; und
Decodieren (615) der ersten Übertragung durch die erste UE basierend auf einer Information, die durch mindestens die erste Downlink-Steuerungssignalisierung und die zweite Downlink-Steuerungssignalisierung bereitgestellt wird,
**dadurch gekennzeichnet, dass**
eine Funk-Ressource, die durch die erste Übertragung verwendet wird, durch die zweite Downlink-Steuerungssignalisierung angezeigt wird, aber nicht durch die erste Downlink-Steuerungssignalisierung angezeigt wird.

2. Verfahren gemäß Anspruch 1, wobei die zweite Downlink-Steuerungssignalisierung eine andere Information anzeigt, welche nicht durch die erste Downlink-Steuerungssignalisierung angezeigt wird, wobei die andere Information mindestens eins von einer Redundanzversion, die durch die erste Übertragung verwendet wird, einem Modulations- und Codierungsschema, das durch die erste Übertragung verwendet wird, und einer Vorcodierungsinformation, die durch die erste Übertragung verwendet wird, ist.

3. Verfahren für einen Netzwerkknoten (100) in einem Funkkommunikationssystem, aufweisend:
Senden (705) einer ersten Downlink-Steuerungssignalisierung, die eine erste Übertragung an eine erste Teilnehmerausrüstung (116), nachfolgend "UE" genannt, anzeigt, wobei die erste Downlink-Steuerungssignalisierung durch eine erste Identifikation identifiziert wird, die von der ersten UE (116) verwendet wird; und
Senden (710) einer zweiten Downlink-Steuerungssignalisierung, die eine zweite Übertragung an eine zweite UE (122) anzeigt, wobei die zweite Downlink-Steuerungssignalisierung durch eine zweite Identifikation identifiziert wird, die von der zweiten UE (122) verwendet wird, und die zweite Downlink-Steuerungssignalisierung mindestens eine Information aufweist, welche nicht in der ersten Downlink-Steuerungssignalisierung enthalten ist und welche verwendet wird, um die erste Übertragung zu decodieren,
**dadurch gekennzeichnet, dass**
mindestens eine Information eine Funk-Ressource aufweist, die durch die erste Übertragung verwendet wird.

4. Verfahren gemäß Anspruch 3, wobei die mindestens eine Information eine Redundanzversion, die durch die erste Übertragung verwendet wird, ein Modulations- und Codierungsschema, das durch die erste Übertragung verwendet wird, und/oder eine Vorcodierungsinformation, die durch die erste Übertragung verwendet wird, aufweist.

5. Verfahren gemäß einem der vorstehenden Ansprüche, wobei die erste Downlink-Steuerungssignalisierung eine Anzeige aufweist, um der ersten UE (116) zu ermöglichen, zu entscheiden, ob die erste UE (116) die zweite Downlink-Steuerungssignalisierung empfangen muss.

6. Verfahren gemäß einem der vorstehenden Ansprüche, wobei die erste Downlink-Steuerungssignalisierung und die zweite Downlink-Steuerungssignalisierung in dem gleichen Unterrahmen übertragen werden.

7. Verfahren gemäß einem der vorstehenden Ansprüche, wobei die zweite Identifikation durch die erste Downlink-Steuerungssignalisierung angezeigt oder zu der ersten UE (116) vorkonfiguriert wird.

8. Verfahren gemäß einem der vorstehenden Ansprüche, wobei die erste Identifikation und die zweite Identifikation Cell-Radio-Network-Temporary-Identifikatoren, nachfolgend "C-RNTI" genannt, sind.

9. Verfahren gemäß einem der vorstehenden Ansprüche, wobei die erste Übertragung mindestens ein erstes Signal für die erste UE (116) und ein zweites Signal für die zweite UE (122) aufweist, die in dem Leistungsbereich gemultiplext werden.

10. Verfahren gemäß einem der vorstehenden Ansprüche, wobei die erste Übertragung und die zweite Übertragung die gleiche Funkressource in der gleichen Zeit verwenden.

11. Erste Teilnehmerausrüstung (116), nachfolgend "UE" genannt, in einem Funkkommunikationssystem, aufweisend:
eine Steuerungsschaltung (306);
einen Prozessor (308), der in der Steuerungsschaltung (306) installiert ist; und
einen Speicher (310), der in der Steuerungsschaltung (306) installiert und funktionsbereit mit dem Prozessor (308) verbunden ist;
wobei der Prozessor (308) eingerichtet ist, einen Programm-Code (312), der in dem Speicher (310) gespeichert ist, auszuführen, um der ersten UE (116) zu ermöglichen, die Verfahrensschritte, wie in einem der Ansprüche 1, 2 und 5 bis 10 definiert, auszuführen.

12. Netzwerkknoten (100) in einem Funkkommunikationssystem, aufweisend:
eine Steuerungsschaltung (306);
einen Prozessor (308), der in der Steuerungsschaltung (306) installiert ist;
einen Speicher (310), der in der Steuerungsschaltung (306) installiert und funktionsbereit mit dem Prozessor (308) verbunden ist;
wobei der Prozessor (308) eingerichtet ist, einen Programm-Code (312), der in dem Speicher (310) gespeichert ist, auszuführen, um dem Netzwerkknoten (100) zu ermöglichen, die Verfahrensschritte, wie in einem der Ansprüche 3 bis 10 definiert, auszuführen.

## Revendications

1. Procédé pour un premier Équipement Utilisateur (116), nommé "UE" ci-après, dans un système de communication sans fil, comprenant le fait :
de recevoir (605), par le premier UE, une première signalisation de commande de liaison descendante indiquant une première transmission au premier UE (116), où la première signalisation de commande de liaison descendante est identifiée par une première identification utilisée par le premier UE (116) ;
de recevoir (610), par le premier UE, une deuxième signalisation de commande de liaison descendante indiquant une deuxième transmission à un deuxième UE (122), où la deuxième signalisation de commande de liaison descendante est identifiée par une deuxième identification utilisée par le deuxième UE (122) ; et
de décoder (615), par le premier UE, la première transmission sur la base d'informations fournies par au moins la première signalisation de commande de liaison descendante et la deuxième signalisation de commande de liaison descendante, **caractérisé en ce qu'**une ressource radio utilisée par la première transmission est indiquée par la deuxième signalisation de commande de liaison descendante mais n'est pas indiquée par la première signalisation de commande de liaison descendante.

2. Procédé de la revendication 1, dans lequel la deuxième signalisation de commande de liaison descendante indique une autre information qui n'est pas indiquée par la première signalisation de commande de liaison descendante, où l'autre information est une version de redondance utilisée par la première transmission et/ou un schéma de modulation et de codage utilisé par la première transmission et/ou une information de précodage utilisée par la première transmission.

3. Procédé pour un noeud de réseau (100) dans un système de communication sans fil, comprenant le fait :
de transmettre (705) une première signalisation de commande de liaison descendante indiquant une première transmission à un premier Équipement Utilisateur (116), nommé "UE" ci-après, où la première signalisation de commande de liaison descendante est identifiée par une première identification utilisée par le premier UE (116) ; et
de transmettre (710) une deuxième signalisation de commande de liaison descendante indiquant une deuxième transmission à un deuxième UE (122), où la deuxième signalisation de commande de liaison descendante est identifiée par une deuxième identification utilisée par le deuxième UE (122) et la deuxième signalisation de commande de liaison descendante comporte au moins une information, qui n'est pas incluse dans la première signalisation de commande de liaison descendante et qui est utilisée pour décoder la première transmission, **caractérisé en ce qu'**au moins une information comporte une ressource radio utilisée par la première transmission.

4. Procédé de la revendication 3, dans lequel l'au moins une information comporte une version de redondance utilisée par la première transmission, un schéma de modulation et de codage utilisé par la première transmission et/ou une information de précodage utilisée par la première transmission.

5. Procédé de l'une quelconque des revendications précédentes, dans lequel la première signalisation de commande de liaison descendante comporte une indication pour permettre au premier UE (116) de décider si le premier UE (116) doit recevoir la deuxième signalisation de commande de liaison descendante.

6. Procédé de l'une quelconque des revendications précédentes, dans lequel la première signalisation de commande de liaison descendante et la deuxième signalisation de commande de liaison descendante sont transmises dans la même sous-trame.

7. Procédé de l'une quelconque des revendications précédentes, dans lequel la deuxième identification est indiquée par la première signalisation de commande de liaison descendante ou préconfigurée sur le premier UE (116).

8. Procédé de l'une quelconque des revendications précédentes, dans lequel la première identification et la deuxième identification sont un Identifiant Temporaire de Réseau Radio Cellulaire, nommé "C-RNTI" ci-après.

9. Procédé de l'une quelconque des revendications précédentes, dans lequel la première transmission comprend au moins un premier signal pour le premier UE (116) et un deuxième signal pour le deuxième UE (122) multiplexés dans le domaine de puissance.

10. Procédé de l'une quelconque des revendications précédentes, dans lequel la première transmission et la deuxième transmission utilisent la même ressource radio dans la même synchronisation.

11. Premier Équipement Utilisateur (116), nommé "UE" ci-après, dans un système de communication sans fil, comprenant :
un circuit de commande (306) ;
un processeur (308) installé dans le circuit de commande (306) ; et
une mémoire (310) installée dans le circuit de commande (306) et couplée de manière fonctionnelle au processeur (308) ;
dans lequel le processeur (308) est configuré pour exécuter un code de programme (312) stocké dans la mémoire (310) pour permettre au premier UE (116) de réaliser les étapes de procédé telles que définies dans l'une quelconque des revendications 1, 2 et 5 à 10.

12. Noeud de réseau (100) dans un système de communication sans fil, comprenant :
un circuit de commande (306) ;
un processeur (308) installé dans le circuit de commande (306) ;
une mémoire (310) installée dans le circuit de commande (306) et couplée de manière fonctionnelle au processeur (308) ;
dans lequel le processeur (308) est configuré pour exécuter un code de programme (312) stocké dans la mémoire (310) pour permettre au noeud de réseau (100) de réaliser les étapes de procédé telles que définies dans l'une quelconque des revendications 3 à 10.
